# EUROPÄISCHE PATENTSCHRIFT

(11) **EP 0 949 180 B1**
(45) Veröffentlichungstag und Bekanntmachung des Hinweises auf die Patenterteilung: **22.01.2003**
(21) Anmeldenummer: 99104902.4
(22) Anmeldetag: 11.03.1999
(51) Int. Cl.: B66B 9/16

(54) **Schleppkabelführung für einen Bauaufzug oder dgl.**
Guide for the traction cable of a building hoist or similar
Guide pour le câble tracteur d'un ascenseur de construction ou similaire

(30) Priorität: 16.03.1998 DE 29804705 U
(43) Veröffentlichungstag der Anmeldung: 13.10.1999
(73) Patentinhaber: GEDA-Dechentreiter GmbH & Co. KG., D-86663 Asbach-Bäumenheim (DE)
(72) Erfinder: Schlund, Thomas, D-86720 Nördlingen (DE)
(74) Vertreter: Zeitler & Kollegen

(56) Entgegenhaltungen:
- DE-A- 3 628 446
- FR-A- 2 463 090

## Beschreibung

Die Erfindung betrifft einen Bauaufzug oder dgl. gemäß dem Oberbegriff des Anspruchs 1.

Bei derartigen Bauaufzügen ist hinsichtlich des Schleppkabels, welches eine bodenseitige Energiequelle mit der Antriebseinheit des Hubschlittens verbindet, die Anordnung üblicherweise derart getroffen, daß dieses Schleppkabel lose vom Hubschlitten bzw. dessen Antriebseinheit herunterhängt und in Abhängigkeit von der jeweiligen Höhenstellung des Hubschlittens mehr oder weniger stark von der bodenseitigen Kabelsammelstelle abgezogen ist. Diese Kabelsammelstelle kann eine einfache oberseitig offene Tonne, eine Kabeltrommel oder dgl. sein.

In jedem Fall ist aber mit dieser Anordnung der Nachteil verbunden, daß das Schleppkabel nicht nur den Wetterunbilden sowie dem auf einer Baustelle herrschenden rauhen Betrieb ausgesetzt ist, sondern auch, weil lediglich lose herabhängend, in keiner Weise geführt, geschweige denn geschützt ist.

Es ist zwar schon bekannt, das Schleppkabel entlang der Leiter oder des Mastes mit in großen Abständen voneinander angeordneten Bügeln zu halten, um übergroße Ausschläge des Schleppkabels bzw. unkontrollierte Schwenkbewegungen hiervon zu vermeiden. Eine derartige Konstruktion ist jedoch gleichfalls wenig befriedigend, da die Bügel wegen der erforderlichen freien Beweglichkeit des Hubschlittens entsprechend weit offen sein müssen und daher weder eine eigentliche Führung des Schleppkabels noch dessen Schutz gewährleisten können.

Der Erfindung liegt daher die Aufgabe zugrunde, zur Beseitigung der geschilderten Nachteile den Bauaufzug oder dgl. derart auszugestalten, daß das jeweils von der bodenseitigen Kabelsammelstelle bis zur Antriebseinheit des Hubschlittens sich erstreckende Schleppkabel vor unerwünschten und störenden Einflüssen bewahrt ist sowie unter größtmöglichem Schutz verläuft.

Diese Aufgabe wird mit der Erfindung durch die Merkmale des Anspruchs 1 gelöst. Vorteilhafte Ausgestaltungen hiervon sind in den weiteren Ansprüchen beschrieben.

Erfindungsgemäß ist für das Schleppkabel eine eigene gesonderte Führung vorgesehen, die gehäuseförmig ausgebildet ist und in der das Schleppkabel verläuft. Diese Schleppkabelführung erstreckt sich entlang der Leiter des Bauaufzuges oder dgl. über wenigstens Teile der Leiter, wobei sie eine durchgehende Längsöffnung aufweist, um den jederzeitigen Austritt des Schleppkabels in Richtung Antriebseinheit des Hubschlittens zu ermöglichen.

Um einen vollständigen Schutz des Schleppkabels zu gewährleisten, ist es von Vorteil, wenn sich die Schleppkabelführung über die gesamte oder weitgehend die gesamte Länge der Leiter erstreckt.

Zweckmäßigerweise ist die Schleppkabelführung als Profilrohr ausgebildet, wobei dieses Profilrohr einen kreisförmigen, quadratischen oder anderweitig profilförmigen Querschnitt aufweisen kann.

Zweckmäßigerweise ist die Längsöffnung des die Schleppkabelführung bildenden Profilrohres ein Längsschlitz. Hierbei liegt es im Rahmen der Erfindung, daß dieser Längsschlitz entlang seiner beiden Begrenzungskanten wulstförmig verdickt bzw. abgerundet ist, um einen störungsfreien Ein- bzw. Austritt des Schleppkabels zu gewährleisten.

In Weiterbildung der Erfindung besteht das Profilrohr aus einem federnd elastischen Werkstoff. Dieser Werkstoff kann Kunststoff, insbesondere witterungsbeständiges Polyvinylchlorid (PVC) sein, so daß ein derartiges Profilrohr dem jeweiligen Eintritt bzw. Austritt des Schleppkabels keinen störenden Widerstand entgegensetzt.

Statt dessen oder zusätzlich kann das Profilrohr auch in seiner Wandstärke und/oder in seinem Wandverlauf derart ausgestaltet sein, daß es zum Ein- und Austritt des Schleppkabels federelastisch aufbiegbar ist. Hierbei ist es von Vorteil, wenn das Profilrohr ein- oder beidseits seines Längsschlitzes eine eingezogene Wandstelle aufweist, die gleichsam als Scharnier beim Aufbiegen des Profilrohres an der jeweiligen Austrittsstelle des Schleppkabels wirkt.

Eine besonders einfache und wirtschaftliche Herstellung des Profilrohres ergibt sich dann, wenn dieses ein Strangpreßprofil ist.

Am bodenseitigen Kabeleintritt der Schleppkabelführung, der sich an oder nahe der Kabelsammelstelle befindet, weist die Schleppkabelführung vorteilhafterweise Führungsrollen auf, damit das Schleppkabel von der Kabelsammelstelle, wie einer Kabeltrommel und dgl., gleichsam reibungslos in die Schleppkabelführung eintreten kann.

Es liegt im Rahmen der Erfindung, daß die Schleppkabelführung an der dem Hubschlitten gegenüberliegenden Rückseite der Leiter befestigt ist.

Erfindungsgemäß ist am jeweiligen Schleppkabelaustritt die Ausgestaltung derart getroffen, daß der Hubschlitten an der Verbindungsstelle zwischen Schleppkabel und Antriebseinheit einen Führungsbügel trägt. Dieser ist vorteilhafterweise rohrförmig ausgestaltet und umhüllt somit das Schleppkabel, wobei der Führungsbügel in den Längsschlitz des Profilrohres eingreift und somit bei der Translationsbewegung des Hubschlittens diesen Längsschlitz ständig in der erforderlichen Weise mehr oder weniger geringfügig aufweitet.

Von erfindungsgemäßer Bedeutung ist in jedem Fall, daß das Schleppkabel aufgrund der für dieses vorgesehenen Führung ständig vor schädlichen Beanspruchungen geschützt und gleichzeitig sicher geführt ist.

Die Erfindung wird im folgenden anhand der Zeichnung näher erläutert. Diese zeigt in:
- Fig. 1: die erfindungsgemäße Schleppkabelführung an der Leiter eines Bauaufzuges in Rückansicht,
- Fig. 2: im Querschnitt entlang Linie II-II nach Fig. 1 und
- Fig. 3: querschnittlich eine Ausführungsform des Profilrohres der Schleppkabelführung.

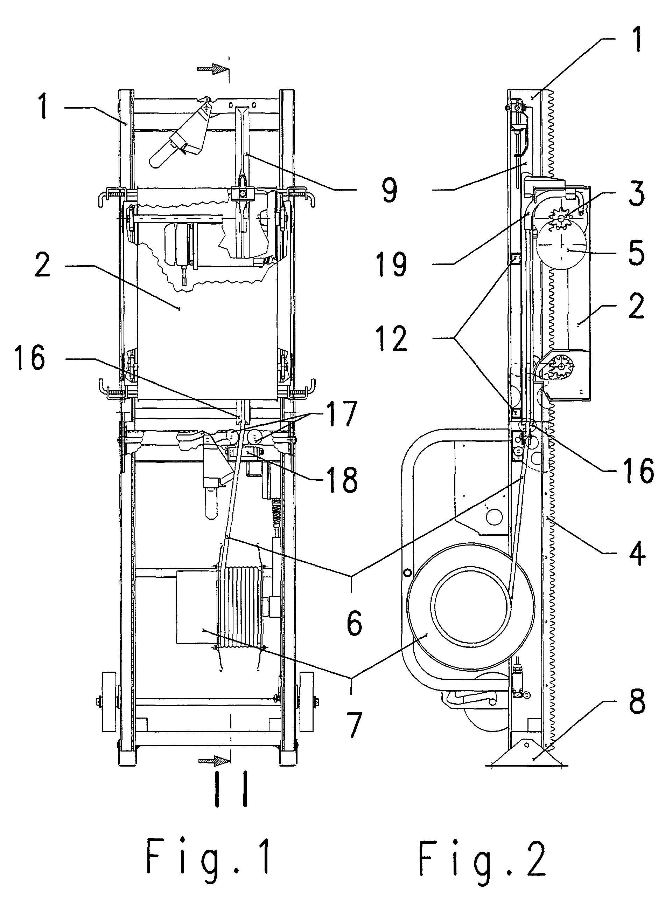

Wie aus Fig. 1 und 2 der Zeichnung ersichtlich, weist der lediglich des Beispiels halber dargestellte Bauaufzug eine Leiter 1 auf, entlang welcher ein zur Aufnahme einer Lastbühne oder dgl. ausgebildeter Hubschlitten 2 verfahrbar ist. Zu diesem Zwecke ist im Hubschlitten 2 ein Zahnritzel 3 gelagert, das mit einer entlang der Leiter 1 befestigten Zahnstange 4 kämmt.

Der Hubschlitten 2 trägt außerdem eine elektromotorische Antriebseinheit 5, die das Zahnritzel 3 antreibt und über ein Elektrokabel 6, ein sog. Schleppkabel, an eine bodenseitige Energiequelle angeschlossen ist. Wie aus der Zeichnung ersichtlich, ist hierbei das Schleppkabel 6 bis zu einer bodenseitigen Kabelsammelstelle 7 geführt, die beim dargestellten Ausführungsbeispiel als an der Rückseite der Leiter 1 nahe dem Leiterfuß 8 befestigte Kabeltrommel ausgebildet ist.

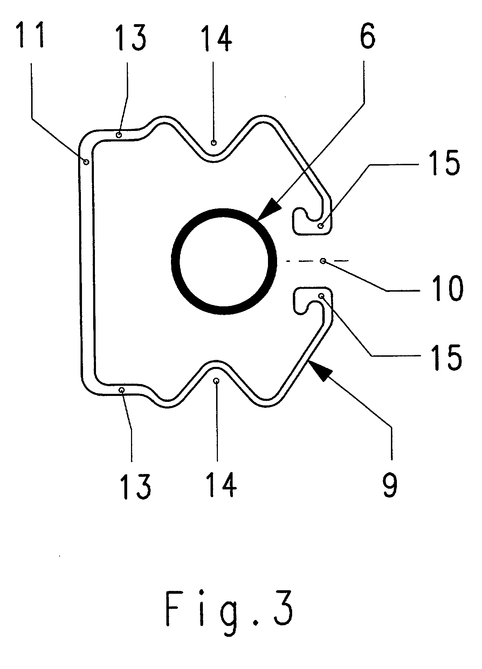

Zur Führung sowie zum Schutz verläuft das Schleppkabel 6 in einer gehäuseförmigen Schleppkabelführung 9, die in der aus Fig. 3 ersichtlichen Weise als Profilrohr mit mehr oder weniger quadratischem Querschnitt ausgebildet ist und sich weitgehend über die gesamte Länge der Leiter 1 erstreckt. Das Profilrohr 9 weist an seiner einen Seite einen durchgehenden Längsschlitz 10 auf und ist mit seiner gegenüberliegenden Wand 11 an der Leiter 1 des Bauaufzuges bzw. an deren Querstreben 12 in geeigneter Weise befestigt. Das Profilrohr 9 besteht aus elastisch federndem Kunststoff, insbesondere aus witterungsbeständigem Polyvinylchlorid (PVC), und ist als Strangpreßprofil hergestellt. Die federelastische Eigenschaft des Profilrohrs 9 ist insbesondere an dessen Längsschlitz 10 erwünscht, um den Eintritt und Austritt des Schleppkabels 6 ohne größeren Widerstand zu ermöglichen. Zu diesem Zweck weisen außerdem die sich an die Wand 11 des Profilrohrs 9 anschließenden beiden Seitenwände 13 jeweils eine eingezogene Wandstelle 14 auf, die beim Eintritt bzw. Austritt des Schleppkabels 6 in bzw. aus dem Längsschlitz 10 wie eine Schwenkstelle bzw. wie ein Scharnier wirkt und somit die federelastische Eigenschaft des Profilrohrs 9 weiter verbessert.

Der Längsschlitz 10 des Profilrohrs 9 ist entlang seiner beiden Begrenzungskanten mit einer wulstförmigen Verdickung 15 versehen, die gleichfalls einen schonenden Eintritt bzw. Austritt des Schleppkabels 6 in bzw. aus dem Profilrohr 9 begünstigt. Das das Schleppkabel 6 führende Profilrohr 9, das sich über weitgehend die gesamte Länge der Leiter 1 erstreckt, weist an seinem unteren Ende an bzw. nahe der Kabeltrommel 7 einen Kabeleintritt 16 auf und ist dort mit Führungsrollen 17 und 18 versehen, um das Schleppkabel 6 stets sicher und störungsfrei in das Profilrohr 9 einzuführen.

Um demgegenüber den jederzeitigen störungsfreien Austritt des Schleppkabels 6 in Richtung der Antriebseinheit 5 des Hubschlittens 2 zu gewährleisten, trägt der Hubschlitten 2 in der aus Fig. 2 ersichtlichen Weise an der Verbindungsstelle zwischen Schleppkabel 6 und Antriebseinheit 5 einen Führungsbügel 19. In diesem Führungsbügel 19, der beim dargestellten Ausführungsbeispiel rohrförmig ausgebildet ist, läuft das Schleppkabel 6, wobei die Ausgestaltung des Führungsbügels 19 derart getroffen ist, daß dieser gekrümmt verläuft und, den Längsschlitz 10 des Profilrohres 9 durchsetzend, in das Profilrohr 9 eingreift sowie dort ein Stück nach unten ragt (siehe Fig. 2). Auf diese Weise greift der Führungsbügel 19 bei der Auf- und Abbewegung des Hubschlittens 2 der Leiter 1 ständig in den Längsschlitz 10 des Profilrohrs 9 ein und fährt somit entlang diesem Längsschlitz 10 auf und ab.

Dadurch verbleibt das Schleppkabel 6 ständig im Profilrohr 9 und tritt nur mittels des Führungsbügels 19, innerhalb welchem es verläuft, aus dem Profilrohr 9 heraus.

Dadurch ist eine ständige sichere Führung des Schleppkabels 6 bei gleichzeitig gutem Schutz gegen äußere Einflüsse gewährleistet.

Hinsichtlich vorstehend nicht im einzelnen näher erläuterter Merkmale der Erfindung wird im übrigen ausdrücklich auf die Ansprüche sowie auf die Zeichnung verwiesen.

## Patentansprüche

1. Bauaufzug oder dgl. mit einem eine elektromotorische Antriebseinheit (5) aufweisenden Hubschlitten (2), der zur Aufnahme eines Lastaufnahmemittels, beispielsweise einer Lastbühne, eines Förderkorbes oder dgl., ausgebildet und entlang einer Leiter (1), eines Mastes oder dgl. verfahrbar ist, wobei mit der Antriebseinheit (5) ein Schleppkabel (6) verbunden ist, das sich entlang der Leiter (1) bis zu einer bodenseitigen Kabelsammelstelle (7) erstreckt,
**dadurch gekennzeichnet, daß**
Schleppkabel (6) in einer gehäuseförmigen Führung (9) verläuft, die sich entlang der Leiter (1) über wenigstens Teile hiervon erstreckt und, ausgehend von einem Kabeleintritt (16) an oder nahe der Kabelsammelstelle (7), eine durchgehende Längsöffnung (10) zum jederzeitigen Austritt des Schleppkabels (6) in Richtung Antriebseinheit (5) des Hubschlittens (2) aufweist.

2. Bauaufzug nach Anspruch 1, **dadurch gekennzeichnet, daß** sich die Schleppkabelführung (9) über weitgehend die gesamte Länge der Leiter (1) erstreckt.

3. Bauaufzug nach Anspruch 1 oder 2, **dadurch gekennzeichnet, daß** die Schleppkabelführung ein Profilrohr (9) ist.

4. Bauaufzug nach Anspruch 3, **dadurch gekennzeichnet, daß** das Profilrohr (9) querschnittlich kreisförmig, quadratisch oder anderweitig profilförmig ausgebildet ist.

5. Bauaufzug nach einem der vorhergehenden Ansprüche, **dadurch gekennzeichnet, daß** die Längsöffnung der Schleppkabelführung (9) ein Längsschlitz (10) ist.

6. Bauaufzug nach Anspruch 5, **dadurch gekennzeichnet, daß** der Längsschlitz (10) entlang seiner beiden Begrenzungskanten (15) wulstförmig verdickt bzw. abgerundet ist.

7. Bauaufzug nach einem der Ansprüche 3 bis 6, **dadurch gekennzeichnet, daß** das Profilrohr (9) aus federnd elastischem Werkstoff besteht.

8. Bauaufzug nach Anspruch 7, **dadurch gekennzeichnet, daß** das Profilrohr (9) aus Kunststoff, insbesondere aus witterungsbeständigem Polyvinylchlorid (PVC) besteht.

9. Bauaufzug nach einem der Ansprüche 3 bis 8, **dadurch gekennzeichnet, daß** das Profilrohr (9) in seiner Wandstärke und/oder in seinem Wandverlauf derart ausgestaltet ist, daß es zum Ein- und Austritt des Schleppkabels (6) federelastisch aufbiegbar ist.

10. Bauaufzug nach Anspruch 9, **dadurch gekennzeichnet, daß** das Profilrohr ein- oder beidseits seines Längsschlitzes (10) eine eingezogene Wandstelle (14) aufweist.

11. Bauaufzug nach einem der Ansprüche 3 bis 10, **dadurch gekennzeichnet, daß** das Profilrohr (9) ein Strangpreßprofil ist.

12. Bauaufzug nach einem der vorhergehenden Ansprüche, **dadurch gekennzeichnet, daß** die Schleppkabelführung (9) an ihrem Kabeleintritt (16) Führungsrollen (17 und 18) aufweist.

13. Bauaufzug nach einem der vorhergehenden Ansprüche, **dadurch gekennzeichnet, daß** die Schleppkabelführung (9) an der dem Hubschlitten (2) gegenüberliegenden Rückseite der Leiter (1) befestigt ist.

14. Bauaufzug nach einem der vorhergehenden Ansprüche, **dadurch gekennzeichnet, daß** der Hubschlitten (2) an der Verbindungsstelle zwischen Schleppkabel (6) und Antriebseinheit (5) einen, insbesondere rohrförmigen Führungsbügel (19), der das Schleppkabel (6) umhüllt und in den Längsschlitz (10) des Profilrohres (9) eingreift.

## Claims

1. Building hoist or the like, having a lifting carriage (2) having an electric motor drive-unit (5), which carriage (2) is arranged to receive a load-receiving means, such for example as a load-carrying platform, a transport cage or the like, and can be moved along a ladder (1), a mast or the like, wherein there is connected to the drive unit (5) a trailing cable (6) which extends along the ladder (1) to a cable marshalling point (7) at the ground end, **characterised in that** the trailing cable (6) runs in a guide (9) in housing form which extends along the ladder (1) or at least parts thereof and which has, starting from a cable entry (16) at or near the cable marshalling point (7), a continuous longitudinal opening (10) to allow the trailing cable (6) to exit at any time towards the drive unit (5) of the lifting carriage (2).

2. Building hoist according to claim 1, **characterised in that** the trailing cable guide (9) extends for substantially the entire length of the ladder (1).

3. Building hoist according to claim 1 or 2, **characterised in that** the trailing cable guide (9) is a profiled tube (9).

4. Building hoist according to claim 3, **characterised in that** in cross-section the profiled tube (9) is formed to be circular or square or of another profiled shape.

5. Building hoist according to one of the foregoing claims, **characterised in that** the longitudinal opening in the trailing cable guide (9) is a longitudinal slot (10).

6. Building hoist according to claim 5, **characterised in that** along its two defining edges (15) the longitudinal slot (10) is thickened in the form of a bead or is rounded.

7. Building hoist according to one of claims 3 to 6, **characterised in that** the profiled tube (9) is composed of resilient material.

8. Building hoist according to claim 7, **characterised in that** the profiled tube (9) is composed of plastics material and in particular of weathering-resistant polyvinyl chloride (PVC).

9. Building hoist according to one of claims 3 to 8, **characterised in that** the wall-thickness and/or wall configuration of the profiled tube (9) is so designed that the tube (9) can be bent open resiliently for the entry and exit of the trailing cable (6).

10. Building hoist according to claim 9, **characterised in that** the profiled tube has a waisted point (14) in its wall on one or both sides of its longitudinal slot (10).

11. Building hoist according to one of claims 3 to 10, **characterised in that** the profiled tube (9) is an extruded profile.

12. Building hoist according to one of the foregoing claims, **characterised in that** the trailing cable guide (9) has guide rollers (17 and 18) at its cable entry (16).

13. Building hoist according to one of the foregoing claims, **characterised in that** in the trailing cable guide (9) is fastened in place at the rear side of the ladder (1) opposite from the lifting carriage (2).

14. Building hoist according to one of the foregoing claims, **characterised in that** at the point of connection between the trailing cable (6) and drive unit (5) the lifting carriage (2) has a guide arc (19) which is, in particular, tubular and which encloses the trailing cable (6) and engages in the longitudinal slot (10) in the profiled tube (9).

## Revendications

1. Ascenseur de chantier ou similaire comportant un chariot de levage (2) présentant une unité d'entraînement (5) par moteur électrique, ledit chariot étant réalisé pour recevoir un moyen de réception de charge, par exemple une plate-forme de chargement, une nacelle de convoyage ou similaire et qui est déplaçable le long d'une échelle (1), d'un mât ou similaire, un câble traînant (6), qui s'étend le long de l'échelle (1) jusqu'à un point collecteur de câble (7), étant relié à l'unité d'entraînement, **caractérisé en ce que** le câble traînant (6) s'étend dans un guide (9) en forme de boîtier qui s'étend le long de l'échelle (1) sur au moins des parties de celle-ci et qui, depuis une entrée de câble (16) au niveau ou à proximité du point collecteur de câble (7), présente une ouverture longitudinale (10) continue pour faire sortir à tout moment le câble traînant (6) en direction de l'unité d'entraînement (5) du chariot de levage (2).

2. Ascenseur de chantier selon la revendication 1, **caractérisé en ce que** le guide (9) de câble traînant s'étend sur presque toute la longueur de l'échelle (1).

3. Ascenseur de chantier selon l'une ou l'autre des revendications 1 et 2, **caractérisé en ce que** le guide de câble traînant est un tube profilé (9).

4. Ascenseur de chantier selon la revendication 3, **caractérisé en ce que** le tube profilé (9) est réalisé avec une section transversale circulaire, rectangulaire ou avec un profil d'autre forme.

5. Ascenseur de chantier selon l'une des revendications précédentes, **caractérisé en ce que** l'ouverture longitudinale du guide (9) de câble traînant est une fente oblongue (10).

6. Ascenseur de chantier selon la revendication 5, **caractérisé en ce que** la fente oblongue (10) est renflée en forme de bourrelet ou arrondie le long de ses deux arêtes de délimitation (15).

7. Ascenseur de chantier selon l'une des revendications 3 à 6, **caractérisé en ce que** le tube profilé (9) est en un matériau élastique à effet ressort.

8. Ascenseur de chantier selon la revendication 7, **caractérisé en ce que** le tube profilé (9) est en matière plastique, en particulier en chlorure de polyvinyle (PVC) résistant aux intempéries.

9. Ascenseur de chantier selon l'une des revendication 3 à 8, **caractérisé en ce que** le tube profilé (9) a une épaisseur de paroi et/ou un tracé de paroi tel qu'il peut être déployé de manière élastique pour faire entrer et sortir le câble traînant (6).

10. Ascenseur de chantier selon la revendication 9. **caractérisé en ce que** le tube profilé présente un renfoncement de paroi (14) d'un ou des deux côtés de la fente oblongue (10).

11. Ascenseur de chantier selon l'une des revendications 3 à 10, **caractérisé en ce que** le tube profilé est un profilé extrudé.

12. Ascenseur de chantier selon l'une des revendications précédentes, **caractérisé en ce que** le guide (9) de câble traînant présente à son entrée de câble (16) des galets de guidage (17 et 18).

13. Ascenseur de chantier selon l'une des revendications précédentes, **caractérisé en ce que** le guide (9) de câble traînant est fixé sur la face postérieure, opposée au chariot de levage (2), de l'échelle (1).

14. Ascenseur de chantier selon l'une des revendications précédentes, **caractérisé en ce que** le chariot de levage (2) présente au point de liaison entre le câble traînant (6) et l'unité d'entraînement (5) un étrier de guidage (19) en particulier tubulaire qui entoure le câble traînant (6) et qui s'engage dans la fente oblongue (10) du tube profilé (9).
